(19) Europäisches Patentamt

European Patent Office

Office européen des brevets

(11) **EP 1 205 831 B1**

(12) **FASCICULE DE BREVET EUROPEEN**

(45) Date de publication et mention
de la délivrance du brevet:
**29.12.2004 Bulletin 2004/53**

(51) Int Cl.⁷: **G05D 1/00**, G05D 1/06,
B64D 45/00

(21) Numéro de dépôt: **01402447.5**

(22) Date de dépôt: **25.09.2001**

(54) **Procédé et dispositif pour la détection de l'envol d'un avion en cours de décollage**

Verfahren zur Detektion vom Abflug eines Flugzeuges beim Starten

Method for lift-off detection of an aircraft during take-off

(84) Etats contractants désignés:
**AT BE CH CY DE DK ES FI FR GB GR IE IT LI LU MC NL PT SE TR**

(30) Priorité: **14.11.2000 FR 0014606**

(43) Date de publication de la demande:
**15.05.2002 Bulletin 2002/20**

(73) Titulaire: **AIRBUS FRANCE**
**31060 Toulouse (FR)**

(72) Inventeur: **Boe, Régis**
**31880 La Salvetat Saint Gilles (FR)**

(74) Mandataire: **Bonnetat, Christian**
**CABINET BONNETAT**
**29, rue de St. Pétersbourg**
**75008 Paris (FR)**

(56) Documents cités:
**US-A- 5 527 002**

**Description**

La présente invention concerne un procédé et un dispositif pour la détection de l'envol d'un avion en cours de décollage.

On sait que le processus de décollage d'un avion comporte essentiellement une phase de roulage sur le sol suivie par une phase d'envol. Au cours de la phase de roulage, la vitesse, l'assiette longitudinale et la portance de l'avion augmentent progressivement, ce qui décharge en partie les trains d'atterrissage dudit avion, comprimés par la masse de l'avion. Mais, lorsque l'avion, à la fin de la phase de roulage, commence sa phase d'envol, c'est-à-dire quitte le sol, lesdits trains d'atterrissage sont complètement déchargés de la masse de l'avion, de sorte qu'ils se détendent de façon significative.

Aussi, il est aisé de détecter l'envol d'un avion en cours de décollage en mesurant l'allongement desdits trains d'atterrissage ou encore les contraintes d'écrasement auxquelles ils sont soumis.

Cependant, notamment à cause de l'amortissement hydraulique desdits trains d'atterrissage, un dispositif de détection de l'envol d'un avion, basé sur l'observation de ceux-ci, ne peut fournir une réponse suffisamment rapide pour pouvoir être utilisée de façon fiable au cours du processus de décollage.

L'objet principal de la présente invention est de remédier à cet inconvénient et de permettre d'obtenir en temps réel l'information que les roues d'un avion en cours de décollage quittent le sol.

A cet effet, selon l'invention, le procédé pour la détection de l'envol d'un avion en cours de décollage, est remarquable en ce que :

-    au cours du processus de décollage, aussi bien pendant la phase de roulage sur le sol que pendant la phase d'envol, on calcule la grandeur A = K.h+θ, dans laquelle :

   .    θ représente l'assiette longitudinale de l'avion,
   .    h représente la hauteur, par rapport au sol, de la zone de la queue dudit avion qui toucherait le sol si l'assiette longitudinale θ prenait une valeur trop élevée pendant le décollage, et
   .    K est une constante égale à l'inverse de la distance longitudinale séparant ladite zone de queue des articulations des trains d'atterrissage dudit avion sur celui-ci ;

-    on mémorise la valeur de ladite grandeur calculée pendant au moins une partie de ladite phase de roulage ;
-    on compare ladite valeur mémorisée avec la valeur réelle en cours de calcul, de ladite grandeur ; et
-    on détecte ledit envol par le fait que ladite valeur réelle devient supérieure à ladite valeur mémorisée.

Ainsi, par la mise en oeuvre du procédé conforme à la présente invention, on peut obtenir l'information de détection d'envol en temps réel. Le procédé de la présente invention est basé sur la constatation de la Demanderesse que la grandeur A reste quasiment constante pendant ladite phase de roulage, mais croît rapidement et fortement lorsque les roues de l'avion quittent le sol, au début de l'envol dudit avion.

On voit donc que, selon la présente invention, la valeur constante de la grandeur A pendant la phase de roulage, figée et mémorisée, sert de référence pour les calculs. C'est à cette valeur constante figée que sera comparée la valeur croissante de la grandeur A, après l'envol de l'avion.

Afin d'éviter les effets intempestifs des bruits de mesure, la valeur de ladite grandeur calculée pendant au moins une partie de la phase de roulage est moyennée avant mémorisation. Un tel moyennage peut être effectué sur toute la durée de la phase de roulage. Cependant, il peut avantageusement commencer à partir du moment où l'avion atteint en roulant une vitesse prédéterminée, par exemple celle à partir de laquelle les calculateurs de bord de l'avion fournissent une information crédible.

De préférence, bien que pouvant être réalisée à tout moment de la phase de roulage postérieure au moyennage, la mémorisation de ladite valeur de la grandeur calculée pendant au moins une partie de ladite phase de roulage est effectuée, au plus tard, à l'instant où ledit avion atteint en roulant la vitesse de rotation, c'est-à-dire la vitesse à laquelle le pilote de l'avion commence à tirer sur le manche en vue de l'envol.

De plus, par sécurité, il est préférable d'ajouter une marge de sécurité à ladite valeur mémorisée, avant comparaison de celle-ci avec ladite valeur réelle en cours de calcul.

Pour la mise en oeuvre du procédé selon l'invention, on prévoit un dispositif comportant :

-    des moyens pour mesurer l'assiette longitudinale θ dudit avion ;
-    des moyens pour déterminer la hauteur h, par rapport au sol, de la zone de la queue dudit avion qui toucherait le sol si l'assiette longitudinale θ prenait une valeur trop élevée pendant le décollage ;
-    des moyens pour calculer au cours du processus de décollage, aussi bien pendant la phase de roulage sur le sol que pendant la phase d'envol, la grandeur A = K.h+θ, dans laquelle K est une constante égale à l'inverse de la distance longitudinale séparant ladite zone de queue des articulations des trains d'atterrissage dudit avion sur celui-ci ;
-    des moyens de mémorisation de la valeur de ladite grandeur calculée pendant au moins une partie de ladite phase de roulage ; et
-    des moyens de comparaison de ladite valeur mémorisée avec la valeur réelle, en cours de calcul, de ladite grandeur, lesdits moyens de comparaison délivrant à leur sortie un signal de comparaison qui prend l'une ou l'autre de deux valeurs distinctes, telles que :

- la première de ces valeurs, qui est représentative de la phase de roulage de l'avion sur le sol, résulte du fait que ladite valeur mémorisée et ladite valeur réelle sont au moins approximativement égales ;
- la seconde de ces valeurs, qui est représentative de l'envol dudit avion, résulte du fait que ladite valeur réelle est devenue supérieure à ladite valeur mémorisée.

Il est alors avantageux que ledit dispositif comporte :

- des moyens de moyennage par filtrage, disposés entre lesdits moyens de calcul et lesdits moyens de mémorisation ; et
- un additionneur destiné à additionner ladite marge de sécurité à ladite valeur mémorisée et disposé entre lesdits moyens de mémorisation et lesdits moyens de comparaison.

On comprendra aisément que, pour exploiter ledit signal de comparaison, le dispositif conforme à la présente invention peut comporter des moyens d'exploitation recevant ledit signal de comparaison et engendrant, à partir des valeurs de celui-ci, des valeurs d'assiette longitudinale limites pour ledit avion. Dans ce cas, le dispositif conforme à la présente invention peut constituer une aide au décollage de l'avion en permettant d'éviter que la queue de celui-ci touche le sol au cours du processus de décollage.

On sait en effet que, pendant le décollage et sous certaines conditions, la queue d'un avion peut être amenée à heurter le sol. Aussi, on a déjà pensé à protéger la queue de l'avion contre les détériorations qui peuvent en résulter, par exemple par l'installation d'un sabot de protection, ainsi qu'à avertir le pilote de la proximité du sol.

Par exemple, les documents US 3 493 082 et EP 0 319 051 décrivent des sabots de protection de queue, aptes à absorber l'énergie d'un éventuel choc pour protéger le fuselage des détériorations. De tels sabots sont constitués de dispositifs mécaniques passifs, qui ne servent bien entendu que dans le cas d'un toucher de queue effectif avec le sol. Quant à eux, les documents US 3 979 717 et FR 2 547 275 décrivent des systèmes d'alerte avertissant le pilote de la proximité du sol, ledit pilote devant alors agir rapidement pour éviter le toucher de queue.

En fonction de la nature de ses moyens d'exploitation, la présente invention peut fournir au pilote une indication, sonore et/ou visuelle, délimitant un domaine de décollage préconisé dans lequel l'éventualité d'un toucher de queue est éliminée. De plus, si lesdits moyens d'exploitation sont constitués par des calculateurs de vol de l'avion, ceux-ci peuvent gérer automatiquement la dynamique de l'avion en phase de décollage, en exploitant ledit signal de comparaison. Ainsi, dans le cadre de la présente invention, il ne s'agit donc pas d'intervenir en cas de toucher de sabot de queue (comme dans les documents US 3 493 082 et EP 0 319 051), ni d'avertir le pilote que son aéronef est dans une position critique par rapport au sol (comme dans les documents US 3 979 717 et FR 2 547 275).

La mise en oeuvre du dispositif de l'invention comme aide au décollage est simple du fait que ledit signal de comparaison est représentatif de la phase de décollage en cours d'exécution et qu'il peut être utilisé pour anticiper un éventuel toucher du sol par la queue et indiquer au pilote ou à des calculateurs de bord une limite d'assiette longitudinale à ne pas dépasser, appropriée à la phase de décollage en cours de réalisation.

Dans le cas usuel où ledit avion est équipé d'au moins un écran de contrôle indiquant les assiettes longitudinales dudit avion, un exemple de réalisation desdits moyens d'exploitation du dispositif conforme à la présente invention peut comporter des moyens pour afficher consécutivement, sur ledit écran de contrôle, pendant le décollage :

- d'abord une première valeur limite d'assiette longitudinale à ne pas dépasser pour ledit avion pendant la phase de roulage, ladite première valeur limite étant associée à ladite première valeur du signal de comparaison ; puis,
- une seconde valeur limite d'assiette longitudinale à ne pas dépasser pour ledit avion pendant l'envol de celui-ci, ladite seconde valeur limite étant supérieure à ladite première valeur limite et étant associée à ladite seconde valeur du signal de comparaison.

Bien entendu, pour autoriser le basculement d'affichage sur l'écran de contrôle de ladite première valeur limite à ladite seconde valeur limite, il faut s'assurer que certaines conditions propres au décollage de l'avion sont réunies. Aussi, selon une autre particularité de la présente invention, on prévoit des moyens n'autorisant le remplacement, sur ledit écran de contrôle, de l'affichage de ladite première valeur limite par l'affichage de ladite seconde valeur limite que si un décollage est réellement en train de se dérouler.

Pour déterminer si un décollage est réellement en train de se dérouler, on peut, par exemple, détecter la position de la manette des gaz pour vérifier qu'elle se trouve en position «décollage».

Par ailleurs, afin de fixer le domaine de décollage dans lequel le dispositif conforme à la présente invention est actif, on peut prévoir des moyens n'autorisant l'affichage de ladite seconde valeur limite que tant que ladite valeur réelle, en cours de calcul, de ladite grandeur A est inférieure à une valeur prédéterminée, représentative du fait que l'avion est dégagé du sol, le décollage étant terminé, et/ou que tant que les trains d'atterrissage de l'avion ne sont pas complètement détendus. En effet, une fois dégagé du sol, l'indication d'assiette longitudinale n'est plus nécessaire au pilote. Elle pourrait même être gênante pour le pilote. De plus, les écrans de contrôle d'un poste de pilotage d'avion étant très denses en informations, il est préférable de ne pas maintenir l'affichage de ladite seconde valeur limite, alors qu'elle n'est plus utile. Il est donc souhaitable de faire disparaître cette dernière lorsque tout risque de toucher de queue est écarté.

De préférence, les informations respectivement représentatives du fait qu'un décollage est réellement en train de se dérouler, que l'envol de l'avion a eu lieu et que l'avion est dégagé du sol sont appliquées à travers une porte logique de type ET. Ainsi, lorsqu'au moins l'une de ces trois informations n'existe pas, l'affichage de ladite seconde valeur de seuil n'a pas lieu.

Lorsque les conditions autorisant l'affichage de ladite seconde valeur de seuil en remplacement de ladite première sont réunies, la transition est de préférence progressive pour tenir compte de la dynamique de rotation de l'avion. Elle peut par exemple être faite de manière continue en un temps correspondant à un taux de rotation (variation d'assiette longitudinale) nominal pour un décollage, par exemple 2 secondes.

Les figures du dessin annexé feront bien comprendre comment l'invention peut être réalisée. Sur ces figures, des références identiques désignent des éléments semblables.

La figure 1A illustre schématiquement un avion roulant sur le sol, au début de la phase de roulage durant le processus de décollage.

Les figures 1B et 1C illustrent, en vues semblables à celle de la figure 1A, ledit avion respectivement pendant sa course de roulage préalable à l'envol et juste après son envol, ses roues ayant alors quitté le sol.

Les figures 2A, 2B, 2C montrent schématiquement un écran de contrôle dudit avion, illustrant respectivement trois situations en correspondance avec les figures 1A, 1B et 1C.

La figure 3 est un diagramme illustrant, en fonction du temps t, la variation de l'assiette longitudinale θ dudit avion pendant le processus de décollage.

La figure 4 est le schéma synoptique d'un mode de réalisation du dispositif conforme à la présente invention.

La figure 5 est un diagramme illustrant, en fonction du temps t, la fonction calculée par le dispositif conforme à la présente invention, pendant le processus de décollage.

La figure 6 montre le schéma synoptique d'un dispositif conforme à la présente invention, apte à délivrer des valeurs limites d'assiette longitudinale pendant le processus de décollage.

La figure 7 illustre, en fonction du temps t, l'affichage desdites valeurs limites d'assiette longitudinale.

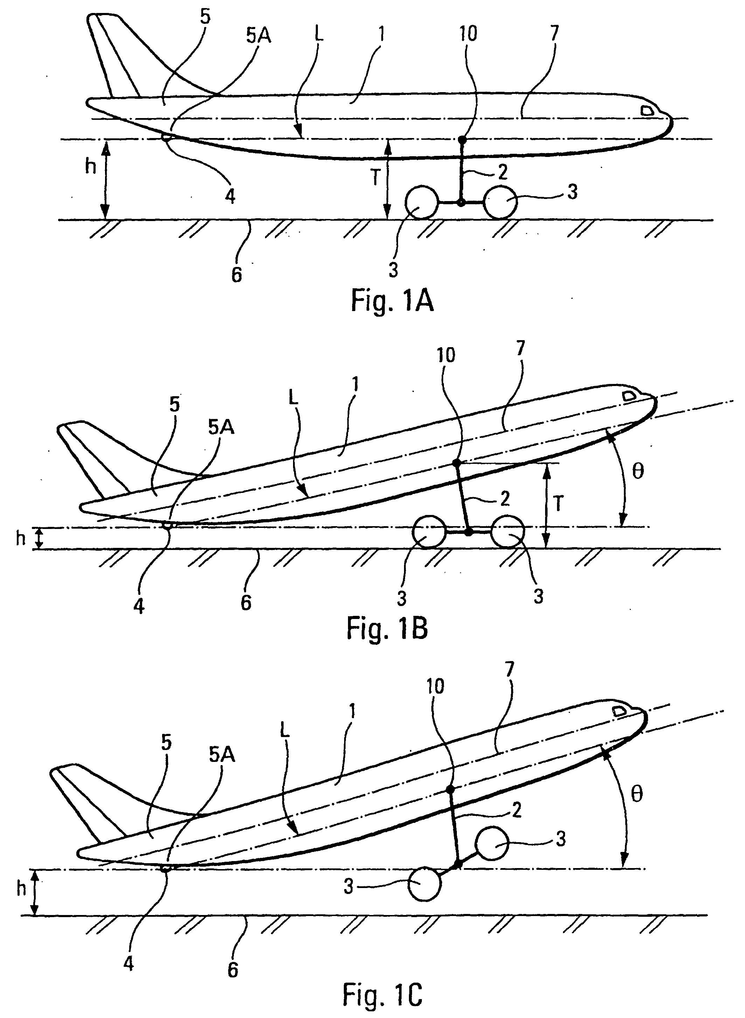

Sur les figures 1A, 1B et 1C, on a représenté un avion 1 pourvu de deux trains d'atterrissage 2, disposés côte à côte et équipés de roues 3. L'avion 1 comporte de plus, comme cela est usuel, un sabot de protection 4 disposé sous sa queue 5 et destiné à venir exceptionnellement au contact du sol 6, dans le cas où l'assiette longitudinale θ de l'avion 1 prendrait une valeur trop grande au cours du décollage. Ce sabot de protection 4 matérialise la zone 5A de la queue 5 susceptible de toucher le sol lors du décollage. Sur ces figures, on a représenté également le plan longitudinal médian 7 de l'avion 1.

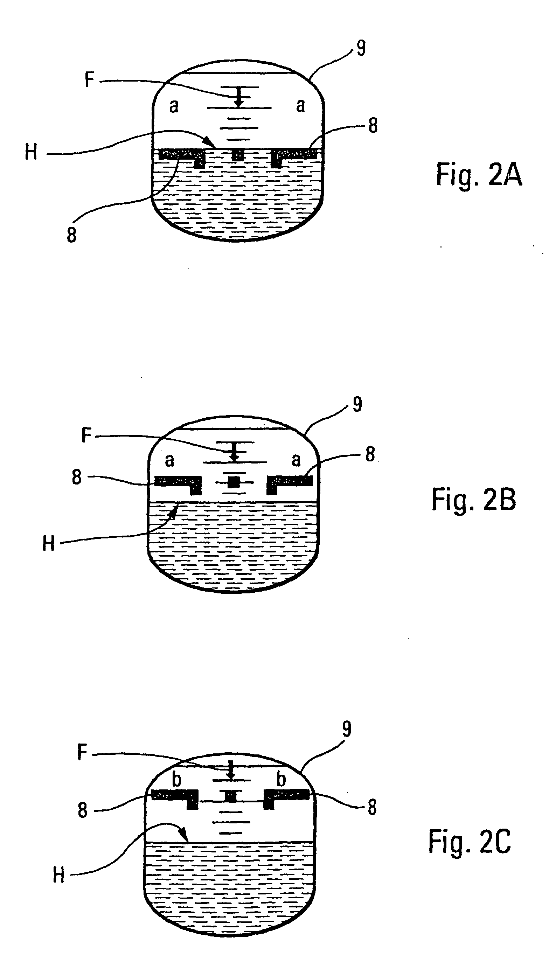

Par ailleurs, l'avion 1 comporte, dans sa cabine de pilotage, un écran de contrôle 9 (voir les figures 2A, 2B et 2C) sur lequel est affiché un symbole mobile 8, représentatif dudit avion 1.

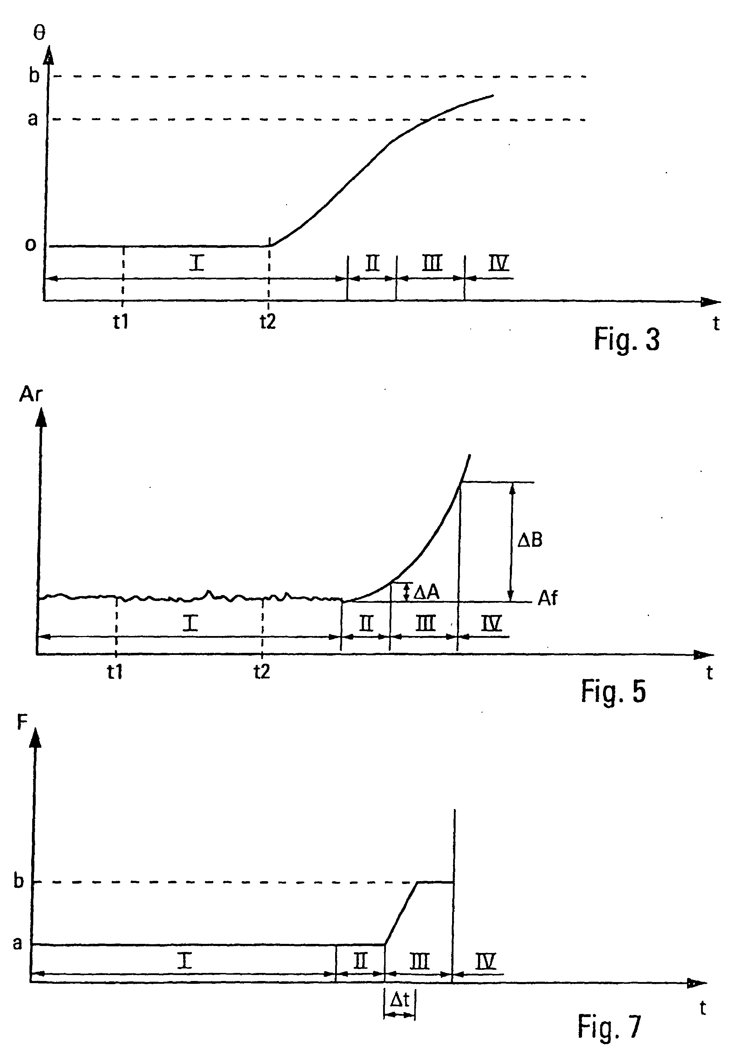

Comme on le sait, le décollage de l'avion 1 se décompose en deux phases principales successives, à savoir une phase de roulage et une phase d'envol, pouvant elles-mêmes être subdivisées chronologiquement en deux étapes, comme cela est illustré sur la figure 3 qui représente l'évolution de l'assiette θ de l'avion 1 en fonction du temps t pendant un décollage. Sur cette figure, les étapes du début et de la fin de la phase de roulage sont indiquées respectivement par les références I et II, tandis que les étapes du début et de la fin de la phase d'envol sont référencées III et IV, respectivement.

Pendant l'étape I de début de la phase de roulage (voir les figures 1A, 2A et 3), l'avion 1 roule sur le sol 6 avec ses trains d'atterrissage 2 comprimés par sa masse et avec une assiette longitudinale sensiblement nulle, de sorte que, sur l'écran de contrôle 9, le symbole 8 de l'avion 1 est sensiblement confondu avec la ligne H d'horizon artificiel affichée sur ledit écran. Dans cette situation, la hauteur h du sabot 4 par rapport au sol 6 est sensiblement égale à la hauteur T des trains d'atterrissage 2.

A la fin de l'étape I, la vitesse de l'avion 1 ayant augmenté, l'assiette θ de celui-ci commence à croître, de sorte que le symbole 8 de l'avion 1 s'élève progressivement au-dessus de ladite ligne H d'horizon artificiel (voir les figures 1B, 2B et 3). La croissance de l'assiette θ de l'avion 1 se poursuit pendant l'étape II de fin de la phase de roulage et le symbole 8 continue de s'élever au-dessus de la ligne H. A la fin de l'étape II, l'avion 1 quitte le sol 6 et les trains d'atterrissage 2 se détendent de façon significative.

Dès l'étape III de début de la phase d'envol, l'avion 1 prend de l'altitude, de sorte que le symbole 8 de l'avion 1 s'écarte de plus en plus de ladite ligne H (voir les figures 1C, 2C et 3).

On remarquera que, pendant la phase de roulage I, II, l'assiette longitudinale θ que peut prendre l'avion 1 est limitée par les caractéristiques géométriques dudit avion et, notamment, par la hauteur h du sabot de queue 4 : si le pilote tire trop sur le manche de l'avion, le sabot de queue 4 risque de venir toucher le sol 6.

Si on appelle L la longueur longitudinale séparant le sabot de queue 4 des articulations supérieures 10 des trains d'atterrissage 2, on constate que, pendant ladite phase de roulage I, II (figures 1A et 1B) la hauteur T dudit train d'atterrissage est égale à h + L. tg θ. Or, l'assiette longitudinale θ restant faible, on peut écrire

$$T = h + L.\ θ\ ou\ A = K.\ h + θ,$$

en appelant

$$\frac{T}{L} = A\ et\ \frac{1}{L} = K$$

Bien entendu, dans cette dernière expression, le paramètre K est constant, puisque la longueur L est elle-même constante.

Par ailleurs, la Demanderesse a constaté que, pendant toute l'étape I de début de ladite phase de roulage, y compris la phase initiale de rotation au décollage (autour de l'instant t2 sur la figure 3), la quantité A restait elle-même quasiment constante. Ceci est dû au fait que, tant que les trains d'atterrissage 2 n'ont pas commencé à se détendre de façon significative, l'augmentation de l'assiette longitudinale θ compense la diminution de la hauteur h du sabot de queue 4.

En revanche, lorsque le décollage passe à l'étape III de début de la phase d'envol, l'avion 1 commence à prendre de l'altitude, ce qui entraîne l'augmentation de la quantité A par effet combiné de la prise d'assiette longitudinale et de la prise d'altitude.

Ces constatations sont à la base du dispositif d'aide au décollage conforme à la présente invention.

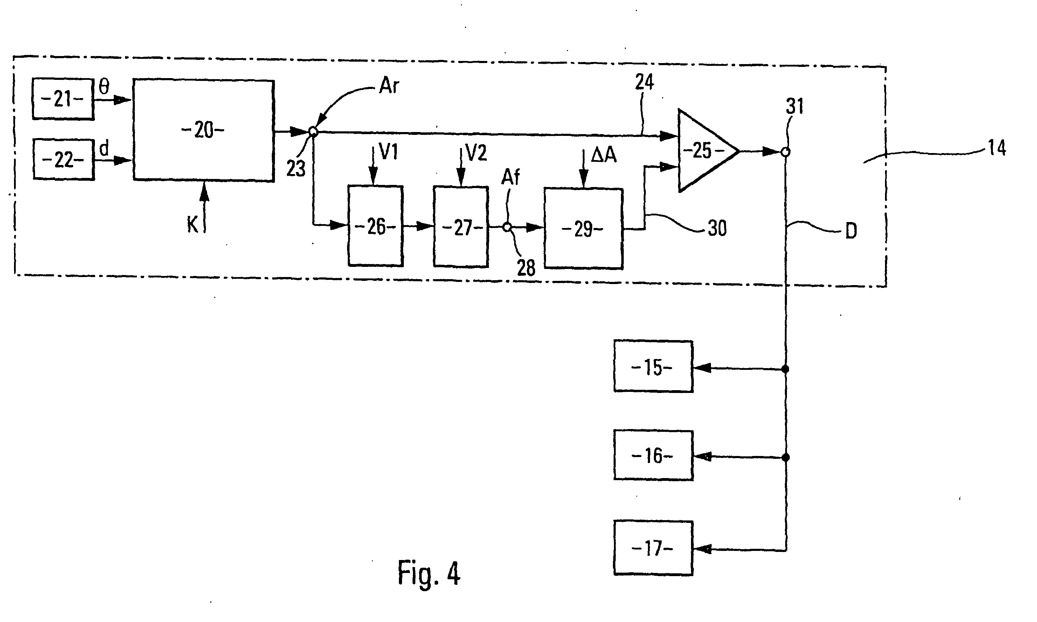

Dans l'exemple de réalisation schématique 14, illustré de façon synoptique sur la figure 4, le dispositif conforme à la présente invention comporte un calculateur 20 recevant, outre le paramètre K, la mesure de l'assiette longitudinale θ de l'avion 1 délivrée par un capteur d'assiette 21, ainsi qu'une mesure d de distance entre un point de l'avion 1 et le sol 6, délivrée par un capteur 22. Par exemple, le capteur 22 peut être un radioaltimètre. Si ce radioaltimètre est disposé à l'emplacement du sabot de queue 4, la mesure d est celle de la hauteur h dudit sabot de queue. Si le radioaltimètre est disposé à un autre emplacement de l'avion 1, il est aisé pour le calculateur 20 de déduire l'estimation de h à partir de la mesure d, compte tenu de l'assiette θ et de la distance longitudinale entre l'emplacement dudit radioaltimètre et ledit sabot de queue. Par exemple, si le capteur (radioaltimètre) 22 est disposé au niveau des trains d'atterrissage 2 de sorte que la mesure d est égale à T, il est évident que h = d - L.tg θ.

Ainsi, connaissant h, θ et K, le calculateur 20 peut calculer aisément la quantité A = K. h + θ et en délivrer la valeur instantanée actuelle (valeur réelle) Ar sur sa borne de sortie 23. Celle-ci est reliée à l'une des entrées 24 d'un comparateur 25, pour transmettre à ce dernier ladite valeur réelle Ar.

Par ailleurs, ladite borne de sortie 23 du calculateur 20 est reliée à l'entrée d'un filtre 26, où elle est moyennée par filtrage à partir de l'instant t1 auquel l'avion 1 atteint en roulant une vitesse prédéterminée V1 (voir la figure 3). La valeur filtrée Af, résultant du filtrage de la valeur réelle Ar par le filtre 26, est ensuite mémorisée, à un instant t2 auquel l'avion 1 atteint une vitesse V2, supérieure à V1, dans une mémoire 27, à la sortie 28 de laquelle elle est disponible. Cette sortie 28 est reliée à un additionneur 29, dans lequel une marge de sécurité ΔA est additionnée à la valeur filtrée Af. La sortie de l'additionneur 29 est reliée à l'autre entrée 30 du comparateur 25. De façon avantageuse, la vitesse V2 est choisie pour être la vitesse de rotation de l'avion 1.

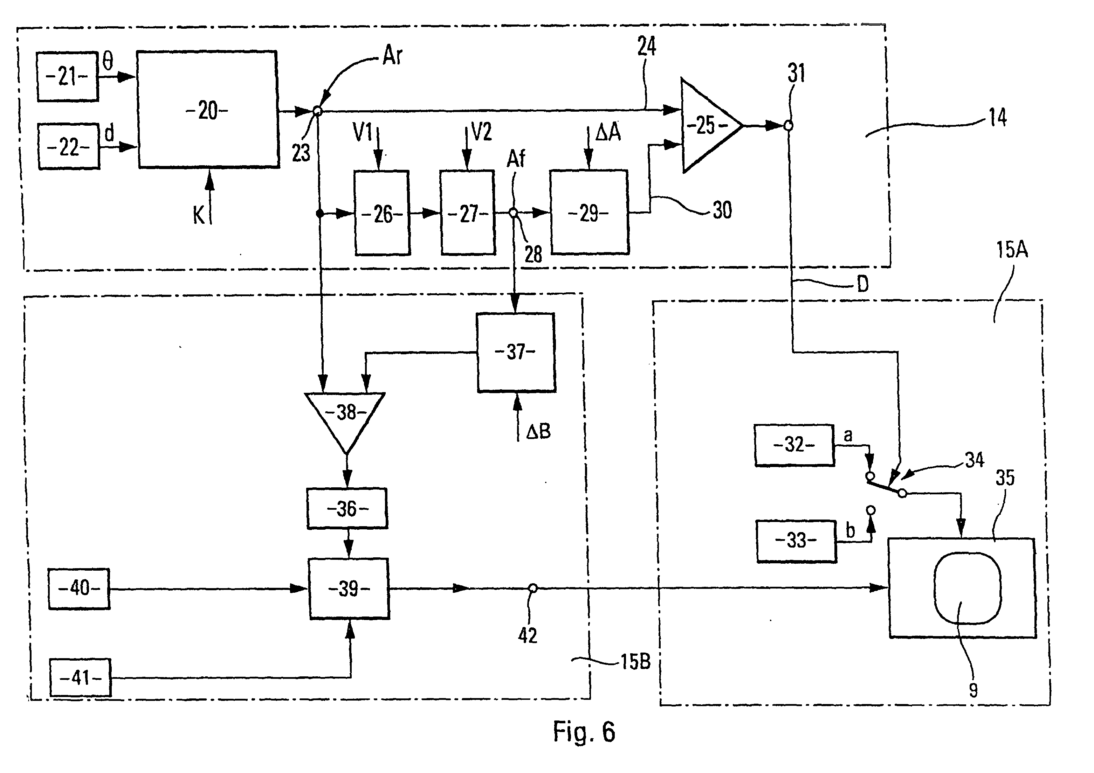

Comme cela est illustré schématiquement sur la figure 5, la valeur réelle calculée Ar de la grandeur A est constante pendant toute l'étape du début I de la phase de roulage, mais croît rapidement et fortement à partir de l'étape II de fin de ladite phase de roulage et pendant la phase d'envol III, IV.

Ainsi, pendant le processus de décollage, le comparateur 25 compare la valeur réelle Ar à la valeur de référence Af+ΔA. On notera que la marge ΔA permet, non seulement d'empêcher le basculement intempestif du comparateur 25 dans le cas où la valeur réelle Ar serait fortement bruitée, mais encore de détecter que la phase d'envol a commencé et que le pilote de l'avion 1 va pouvoir augmenter l'assiette longitudinale θ dudit avion.

A la sortie 31 du comparateur 25 apparaît donc un signal de comparaison D pouvant prendre l'une ou l'autre de deux valeurs distinctes D1 ou D2 :

- tant que la valeur réelle Ar est sensiblement égale à la valeur de référence Af+ΔA, le signal de comparaison D prend sa première valeur D1, qui est alors représentative de la phase de roulage ;
- mais quand la valeur réelle Ar devient supérieure à la valeur de référence Af+ΔA, le signal de comparaison prend sa seconde valeur D2, qui est alors représentative de la phase d'envol.

Ainsi, le basculement du signal D, de sa première valeur D1 à sa seconde valeur D2, est représentatif de l'envol de l'avion 1.

Pour exploiter une telle information d'envol, la sortie 31 peut être reliée à différents dispositifs d'exploitation, comme une alarme visuelle 15, une alarme sonore 16, ou bien encore à un calculateur de commande de vol 17 apte à gérer la dynamique de l'avion 1 pendant le processus de décollage.

Sur la figure 6, on a représenté le dispositif 14 associé à une alarme visuelle 15, constituée d'un afficheur d'assiette longitudinale limite 15A et d'une logique de commande 15B et utilisant l'écran de contrôle 9 mentionné ci-dessus.

L'afficheur d'assiette longitudinale limite 15A comporte deux générateurs 32 et 33, engendrant deux tensions distinctes, respectivement représentatives de deux valeurs limites a et b pour l'assiette longitudinale θ, ces valeurs limites étant pré-établies et respectivement appropriées aux caractéristiques de l'avion 1 pendant les phases de roulage et d'envol. Un commutateur 34, commandé par le signal de comparaison D présent sur la sortie 31 du comparateur 25, permet de transmettre l'une ou l'autre desdites valeurs a et b à un appareil d'affichage 35, dont l'écran 9 fait partie.

La logique de commande 15B comporte un additionneur 37 recevant, d'une part, la valeur filtrée Af disponible sur la sortie 28 de la mémoire 27 et d'autre part, une valeur limite ou marge ΔB de la grandeur Ar par rapport à la référence Af (voir la figure 5). Cette valeur limite ΔB est telle que la somme Af +ΔB réalisée par l'additionneur 37 est représentative du fait que l'avion 1 a réussi son décollage et est dégagé du sol, les trains d'atterrissage 2 étant complètement détendus. Dans un comparateur 38, la somme Af+ΔB est comparée à la valeur réelle Ar, disponible sur la sortie 23 du calculateur 20. Le résultat de cette comparaison est adressé, par l'intermédiaire d'un inverseur 36, à l'une des trois entrées d'une porte ET 39, dont les deux autres entrées sont respectivement reliées à un détecteur 40 vérifiant la position de la manette des gaz 40 de l'avion 1 et à un détecteur temporisé 41, contrôlant la longueur du train d'atterrissage 2. A la sortie 42 de la porte 39, est donc disponible un signal représentatif de la coïncidence des signaux provenant du comparateur 38 et des détecteurs 40 et 41.

Le fonctionnement du dispositif de la figure 6 est le suivant (voir également la figure 7) :

I - Pendant l'étape I de début de la phase de roulage (voir les figures 1A et 2A), le signal D prend sa valeur D1 représentative du roulage, mais aucun signal n'apparaît à la sortie 42 de la porte 39, car le détecteur 41 indique que le train d'atterrissage est comprimé. Le commutateur 34 est dans la position représentée sur la figure 6 pour laquelle il relie le générateur 32 à l'écran de contrôle 9. Celui-ci affiche donc la plus petite valeur d'assiette longitudinale limite a, par exemple égale à 10°, comme cela est indiqué par la flèche F (figure 2A).

II - Pendant l'étape II de fin de la phase de roulage (voir les figures 1B et 2B), le signal D garde sa valeur D1. Par suite, bien que le symbole 8 de l'avion 1 s'éloigne de la ligne H d'horizon artificiel, la plus petite des deux valeurs d'assiette longitudinale limite a continue à être affichée sur l'écran de contrôle 9.

III - Pendant l'étape III de début de la phase d'envol, le signal D bascule pour prendre sa valeur D2 représentative de l'envol de l'avion 1, de sorte que le commutateur 34 est actionné pour basculer dans son autre position, pour laquelle il relie le générateur 33 à l'écran de contrôle 9. La flèche F passe alors progressivement, pendant l'espace de temps Δt, de la position a à la position b (voir la figure 2C). La valeur de l'assiette longitudinale b peut par exemple être voisine de 14°.

IV - L'étape IV de la phase d'envol se poursuivant, soit le détecteur 41 bascule, indiquant que les trains d'atterrissage 2 ne sont plus comprimés, soit la valeur réelle Ar devient supérieure à Af+ΔB. A l'un ou l'autre de ces moments, la sortie 42 de la porte 39 bascule, bloquant ainsi l'affichage de la flèche F, qui disparaît de l'écran 9.

Les valeurs numériques pour les assiettes a et b données ci-dessus à titre d'exemple correspondent à un avion 1 dont les trains d'atterrissage 2 sont pourvus d'un boggie basculant.

## Revendications

1. Procédé pour la détection de l'envol d'un avion (1) en cours de décollage,
   **caractérisé en ce que** :

   - au cours du processus de décollage, aussi bien pendant la phase de roulage sur le sol que pendant la phase d'envol, on calcule la grandeur A = K.h + θ, dans laquelle :

     . θ représente l'assiette longitudinale de l'avion,
     . h représente la hauteur, par rapport au sol, de la zone (5A) de la queue (5) dudit avion qui toucherait le sol (6) si l'assiette longitudinale θ prenait une valeur trop élevée pendant le décollage, et
     . K est une constante égale à l'inverse de la distance longitudinale (L) séparant ladite zone de queue (5A) des articulations (10) des trains d'atterrissage (2) dudit avion sur celui-ci ;

   - on mémorise la valeur de ladite grandeur calculée pendant au moins une partie de ladite phase de roulage ;
   - on compare ladite valeur mémorisée avec la valeur réelle en cours de calcul, de ladite grandeur ; et
   - on détecte ledit envol par le fait que ladite valeur réelle devient supérieure à ladite valeur mémorisée.

2. Procédé selon la revendication 1,
   **caractérisé en ce que** la valeur de ladite grandeur calculée pendant au moins une partie de la phase de roulage est moyennée avant mémorisation.

3. Procédé selon la revendication 2,

**caractérisé en ce que** la mémorisation de ladite valeur de la grandeur calculée pendant au moins une partie de ladite phase de roulage est effectuée, au plus tard, à l'instant où ledit avion atteint en roulant la vitesse de rotation.

4. Procédé selon l'une des revendications 1 à 3, **caractérisé en ce qu'**on ajoute une marge de sécurité à ladite valeur mémorisée, avant comparaison de celle-ci avec ladite valeur réelle en cours de calcul.

5. Dispositif pour la détection de l'envol d'un avion en cours de décollage,
   **caractérisé en ce qu'**il comporte :

   - des moyens (21) pour mesurer l'assiette longitudinale θ dudit avion ;
   - des moyens (22) pour déterminer la hauteur h, par rapport au sol, de la zone (5A) de la queue (5) dudit avion qui toucherait le sol (6) si l'assiette longitudinale θ prenait une valeur trop élevée pendant le décollage ;
   - des moyens (20) pour calculer au cours du processus de décollage, aussi bien pendant la phase de roulage sur le sol que pendant la phase d'envol, la grandeur A = K.h+θ, dans laquelle K est une constante égale à l'inverse de la distance longitudinale (L) séparant ladite zone de queue (5A) des articulations (10) des trains d'atterrissage (2) dudit avion sur celui-ci ;
   - des moyens (27) de mémorisation de la valeur de ladite grandeur calculée pendant au moins une partie de ladite phase de roulage ; et
   - des moyens (25) de comparaison de ladite valeur mémorisée avec la valeur réelle, en cours de calcul, de ladite grandeur, lesdits moyens de comparaison délivrant à leur sortie (31) un signal de comparaison (D) qui prend l'une ou l'autre de deux valeurs distinctes, telles que :

     . la première (D1) de ces valeurs résulte du fait que ladite valeur mémorisée et ladite valeur réelle sont au moins approximativement égales et est représentative de la phase de roulage de l'avion sur le sol ;
     . la seconde (D2) de ces valeurs résulte du fait que ladite valeur réelle est devenue supérieure à ladite valeur mémorisée et est représentative de l'envol dudit avion.

6. Dispositif selon la revendication 5,
   **caractérisé en ce qu'**il comporte des moyens (26) de moyennage par filtrage, disposés entre lesdits moyens de calcul (20) et lesdits moyens de mémorisation (27).

7. Dispositif selon l'une des revendications 5 ou 6,

**caractérisé en ce qu'**il comporte, entre lesdits moyens de mémorisation (27) et lesdits moyens de comparaison (25), un additionneur (29) pour additionner une marge de sécurité à ladite valeur mémorisée.

8. Dispositif selon l'une des revendications 5 à 7, **caractérisé en ce qu'**il comporte des moyens d'exploitation (15, 16, 17) recevant ledit signal de comparaison et engendrant, à partir des valeurs de celui-ci, des valeurs d'assiette longitudinale limites pour ledit avion.

9. Dispositif selon la revendication 8, pour un avion (1) équipé d'un écran de contrôle (9) indiquant les assiettes longitudinales dudit avion (1),
   **caractérisé en ce qu'**il comporte des moyens (32, 33, 34) pour afficher consécutivement, sur ledit écran de contrôle (9), pendant le décollage :

   - d'abord une première valeur limite (a) d'assiette longitudinale à ne pas dépasser pour ledit avion pendant la phase de roulage, ladite première valeur limite (a) étant associée à ladite première valeur (D1) du signal de comparaison (D) ; puis,
   - une seconde valeur limite (b) d'assiette longitudinale à ne pas dépasser pour ledit avion pendant l'envol de celui-ci, ladite seconde valeur limite (b) étant supérieure à ladite première valeur limite (a) et étant associée à ladite seconde valeur (D2) du signal de comparaison (D).

10. Dispositif selon la revendication 9,
    **caractérisé en ce qu'**il comporte des moyens (39, 40, 41) n'autorisant le remplacement, sur ledit écran de contrôle (9) de l'affichage de ladite première valeur limite (a) par l'affichage de ladite seconde valeur limite (b) que si un décollage est réellement en train de se dérouler.

11. Dispositif selon l'une des revendications 9 ou 10, **caractérisé en ce qu'**il comporte des moyens (36, 37, 38) n'autorisant l'affichage de ladite seconde valeur limite (b) que tant que ladite valeur calculée instantanée actuelle (Ar) de ladite grandeur A est inférieure à une valeur prédéterminée, représentative du fait que l'avion (1) est dégagé du sol (6), le décollage étant terminé.

12. Dispositif selon l'une des revendications 9 à 11, **caractérisé en ce qu'**il comporte des moyens (41) n'autorisant l'affichage de ladite seconde valeur limite (b) que tant que les trains d'atterrissage (2) de l'avion (1) ne sont pas complètement détendus.

## Claims

1. A process for detecting the lift-off of an aircraft (1) in the course of take-off,
   **characterized in that**:

   - in the course of the take-off procedure, both during the phase of rolling along the ground and during the lift-off phase, the quantity $A = K.h+\theta$ is calculated, in which:

     . $\theta$ represents the longitudinal attitude of the aircraft,
     . h represents the height, with respect to the ground, of the zone (5A) of the tail (5) of said aircraft which would touch the ground (6) if the longitudinal attitude $\theta$ were to take too high a value during take-off, and
     . K is a constant equal to the inverse of the longitudinal distance (L) separating said tail zone (5A) from the articulations (10) of the landing gear (2) of said aircraft thereon;

   - the value of said quantity calculated during at least part of said rolling phase is stored;
   - said stored value is compared with the actual value in the course of calculation, of said quantity; and
   - said lift-off is detected by the fact that said actual value becomes greater than said stored value.

2. The process as claimed in claim 1,
   **characterized in that** the value of said quantity calculated during at least part of the rolling phase is averaged before storage.

3. The process as claimed in claim 2,
   **characterized in that** the storage of said value of the quantity calculated during at least part of said rolling phase is performed, at the latest, at the instant at which said aircraft reaches while rolling the speed of rotation.

4. The process as claimed in one of claims 1 to 3,
   **characterized in that** a safety margin is added to said stored value, before comparing the latter with said actual value in the course of calculation.

5. A device for detecting the lift-off of an aircraft in the course of take-off,
   **characterized in that** it comprises:

   - means (21) for measuring the longitudinal attitude $\theta$ of said aircraft;
   - means (22) for determining the height h, with respect to the ground, of the zone (5A) of the tail (5) of said aircraft which would touch the ground (6) if the longitudinal attitude $\theta$ were to take too high a value during take-off;
   - means (20) for calculating in the course of the take-off procedure, both during the phase of rolling along the ground and during the lift-off phase, the quantity $A = K.h+\theta$, in which K is a constant equal to the inverse of the longitudinal distance (L) separating said tail zone (5A) from the articulations (10) of the landing gear (2) of said aircraft thereon;
   - means (27) of storage of the value of said quantity calculated during at least part of said rolling phase; and
   - means (25) of comparison of said stored value with the actual value, in the course of calculation, of said quantity, said means of comparison delivering at their output (31) a comparison signal (D) which takes one or the other of two distinct values, such that:

     . the first (D1) of these values results from the fact that said stored value and said actual value are at least approximately equal and is representative of the phase of rolling of the aircraft along the ground;
     . the second (D2) of these values results from the fact that said actual value has become greater than said stored value and is representative of the lift-off of said aircraft.

6. The device as claimed in claim 5,
   **characterized in that** it comprises means (26) for averaging by filtering, disposed between said means of calculation (20) and said means of storage (27).

7. The device as claimed in either of claims 5 and 6,
   **characterized in that** it comprises, between said means of storage (27) and said means of comparison (25), an adder (29) for adding a safety margin to said stored value.

8. The device as claimed in one of claims 5 to 7,
   **characterized in that** it comprises means of utilization (15, 16, 17) receiving said comparison signal and generating, from the values of the latter, limit values of longitudinal attitude for said aircraft.

9. The device as claimed in claim 8, for an aircraft (1) equipped with a monitoring screen (9) indicating the longitudinal attitudes of said aircraft (1),
   **characterized in that** it comprises means (32, 33, 34) for consecutively displaying, on said monitoring screen (9) during take-off:

   - firstly a first limit value (a) of longitudinal attitude not to be exceeded for said aircraft during the rolling phase, said first limit value (a) being associated with said first value (D1) of the comparison signal (D); then,

- a second limit value (b) of longitudinal attitude not to be exceeded for said aircraft during the lift-off of the latter, said second limit value (b) being greater than said first limit value (a) and being associated with said second value (D2) of the comparison signal (D).

10. The device as claimed in claim 9, **characterized in that** it comprises means (39, 40, 41) permitting the replacement, on said monitoring screen (9) of the display of said first limit value (a) by the display of said second limit value (b) only if a take-off is actually about to occur.

11. The device as claimed in either of claims 9 and 10, **characterized in that** it comprises means (36, 37, 38) permitting the display of said second limit value (b) only so long as said current instantaneous calculated value (Ar) of said quantity A is less than a predetermined value, representative of the fact that the aircraft (1) is clear of the ground (6), take-off having been completed.

12. The device as claimed in one of claims 9 to 11, **characterized in that** it comprises means (41) permitting the display of said second limit value (b) only so long as the landing gear (2) of the aircraft (1) is not fully relaxed.


**Patentansprüche**

1. Verfahren zur Detektion des Abhebens eines Flugzeugs (1) beim Starten, **dadurch gekennzeichnet, dass**:

   - man beim Startvorgang, sowohl während der Phase, in der das Flugzeug auf dem Boden rollt, als auch während der Phase, in der es abhebt, die Größe A = K.h+θ berechnet, wobei:

     • θ den Trimmwinkel des Flugzeugs darstellt,
     • h die Höhe des Bereichs (5A) am Schwanz (5) des Flugzeugs in Bezug zum Boden darstellt, der den Boden (6) berühren würde, wenn der Trimmwinkel θ während des Startens einen zu hohen Wert annehmen würde, und
     • K eine Konstante gleich dem Kehrwert des Abstands (L) zwischen dem Schwanzbereich (5A) und den Gelenken (10) der Fahrwerke (2) des Flugzeugs ist;

   - man den Wert der Größe speichert, der zumindest während eines Teils der Rollphase berechnet wurde;
   - man den gespeicherten Wert mit dem ständig neu berechneten Istwert der Größe vergleicht; und
   - man das Abheben dadurch entdeckt, dass der Istwert größer wird als der gespeicherte Wert.

2. Verfahren gemäß Anspruch 1, **dadurch gekennzeichnet, dass** der Wert der Größe, der zumindest während eines Teils der Rollphase berechnet wurde, vor dem Speichern gemittelt wird.

3. Verfahren gemäß Anspruch 2, **dadurch gekennzeichnet, dass** das Speichern des Werts der Größe, der zumindest während eines Teils der Rollphase berechnet wurde, spätestens dann erfolgt, wenn das Flugzeug beim Rollen die Drehgeschwindigkeit erreicht.

4. Verfahren gemäß einem der Ansprüche 1 bis 3, **dadurch gekennzeichnet, dass** man eine Sicherheitsmarge zu dem gespeicherten Wert addiert, bevor man diesen mit dem ständig neu berechneten Istwert vergleicht.

5. Vorrichtung zur Detektion des Abhebens eines Flugzeugs beim Starten, **dadurch gekennzeichnet, dass** sie Folgendes aufweist:

   - Geräte (21) zur Messung des Trimmwinkels θ des Flugzeugs;
   - Geräte (22) zur Bestimmung der Höhe h des Bereichs (5A) am Schwanz (5) des Flugzeugs in Bezug zum Boden, der den Boden (6) berühren würde, wenn der Trimmwinkel θ während des Startens einen zu großen Wert annehmen würde;
   - Geräte (20) zur Berechnung der Größe A = K. h+θ während des Startvorgangs, sowohl während der Phase, in der das Flugzeug auf dem Boden rollt, als auch während der Phase, in der es vom Boden abhebt, wobei K eine Konstante gleich dem Kehrwert des Abstands (L) zwischen dem Schwanzbereich (5A) und den Gelenken (10) der Fahrwerke (2) des Flugzeugs ist;
   - Geräte (27) zum Speichern des Werts der Größe, der zumindest während eines Teils der Rollphase berechnet wurde; und
   - Komparatoren (25) zum Vergleich des gespeicherten Werts mit dem ständig neu berechneten Istwert der Größe, wobei die Komparatoren an ihrem Ausgang (31) ein Vergleichssignal (D) liefern, das einen von zwei unterschiedlichen Werten annehmen kann:

- der erste (D1) dieser Werte resultiert aus der Tatsache, dass der gespeicherte Wert und der Istwert zumindest annähernd gleich sind, und steht für die Rollphase des Flugzeugs auf dem Boden;
- der zweite (D2) dieser Werte resultiert aus der Tatsache, dass der Istwert den gespeicherten Wert überschritten hat, und steht für das Abheben des Flugzeugs.

6.   Vorrichtung gemäß Anspruch 5,
**dadurch gekennzeichnet, dass** sie Geräte (26) zur Mittelung durch Filtern aufweist, die zwischen den Rechengeräten (20) und den Speichergeräten (27) angeordnet sind.

7.   Vorrichtung gemäß einem der Ansprüche 5 und 6, **dadurch gekennzeichnet, dass** sie zwischen den Speichergeräten (27) und den Komparatoren (25) einen Addierer (29) aufweist, um eine Sicherheitsmarge zum gespeicherten Wert zu addieren.

8.   Vorrichtung gemäß einem der Ansprüche 5 bis 7, **dadurch gekennzeichnet, dass** sie Auswertungsgeräte (15, 16, 17) aufweist, die das Vergleichssignal empfangen und anhand der Werte dieses Vergleichssignals Grenzwerte des Trimmwinkels für das Flugzeug erzeugen.

9.   Vorrichtung gemäß Anspruch 8 für ein Flugzeug (1), das mit einem Kontrollmonitor (9) ausgestattet ist, der die Trimmwinkel des Flugzeugs (1) anzeigt, **dadurch gekennzeichnet, dass** sie Geräte (32, 33, 34) aufweist, um während des Startens auf dem Kontrollmonitor (9) nacheinander Folgendes anzuzeigen:

-   zunächst einen ersten Grenzwert (a) des Trimmwinkels, den das Flugzeug während der Rollphase nicht überschreiten darf, wobei der erste Grenzwert (a) mit dem ersten Wert (D1) des Vergleichssignals (D) verknüpft ist; dann
-   einen zweiten Grenzwert (b) des Trimmwinkels, den das Flugzeug während seines Abhebens nicht überschreiten darf, wobei der zweite Grenzwert (b) größer ist als der erste Grenzwert (a) und mit dem zweiten Wert (D2) des Vergleichssignals (D) verknüpft ist.

10.  Vorrichtung gemäß Anspruch 9,
**dadurch gekennzeichnet, dass** sie Geräte (39, 40, 41) aufweist, die nur dann erlauben, dass die Anzeige des ersten Grenzwertes (a) auf dem Kontrollmonitor (9) durch die Anzeige des zweiten Grenzwertes (b) ersetzt wird, wenn tatsächlich ein Startvorgang abläuft.

11.  Vorrichtung gemäß einem der Ansprüche 9 und 10,
**dadurch gekennzeichnet, dass** sie Geräte (36, 37, 38) aufweist, die die Anzeige des zweiten Grenzwertes (b) nur solange erlauben, wie der ständig neu berechnete Momentanwert (Ar) der Größe A kleiner ist als ein vordefinierter Wert, der für die Tatsache steht, dass sich das Flugzeug (1) vom Boden (6) gelöst hat, da der Startvorgang beendet ist.

12.  Vorrichtung gemäß einem der Ansprüche 9 bis 11, **dadurch gekennzeichnet, dass** sie Geräte (41) aufweist, die die Anzeige des zweiten Grenzwertes (b) nur solange erlauben, wie die Fahrwerke (2) des Flugzeugs (1) nicht vollständig druckentlastet sind.

Fig. 1A

Fig. 1B

Fig. 1C

Fig. 2A

Fig. 2B

Fig. 2C

Fig. 3

Fig. 5

Fig. 7

Fig. 4

EP 1 205 831 B1

Fig. 6